# EUROPÄISCHE PATENTSCHRIFT

(11) **EP 0 605 858 B1**
(45) Veröffentlichungstag und Bekanntmachung des Hinweises auf die Patenterteilung: **19.03.1997**
(21) Anmeldenummer: 93120860.7
(22) Anmeldetag: 23.12.1993
(51) Int. Cl.: C08G 18/08, C08K 5/10, C09D 175/04, C09J 175/04

(54) **Verfahren zum Absenken des pH-Wertes von anionischen, durch Carboxylatgruppen oder Sulfonatgruppen stabilisierten Polyurethandispersionen**
Process for the lowering of the PH-value of anionic polyurethane dispersions stabilized by carboxylate or sulfonate groups
Procédé d'abaissement de la valeur PH de dispersions de polyuréthanes anioniques stabilisées par des groupes carboxylates ou sulfonates

(30) Priorität: 07.01.1993 DE 4300162
(43) Veröffentlichungstag der Anmeldung: 13.07.1994
(73) Patentinhaber: BASF Aktiengesellschaft, 67063 Ludwigshafen (DE)
(72) Erfinder: Gulbins, Erich, Dr., D-69120 Heidelberg (DE); Haeberle, Karl, Dr., D-67346 Speyer (DE); Licht, Ulrike, Dr., D-68163 Mannheim (DE); Wallon, Alexander, Dr., D-67117 Limburgerhof (DE)

(56) Entgegenhaltungen:
- WO-A-91/17196
- US-A- 4 332 710

## Beschreibung

Die vorliegende Erfindung betrifft ein Verfahren zum Absenken des pH-Wertes von anionischen, durch Carboxylatgruppen oder Sulfonatgruppen stabilisierten Polyurethandispersionen.

Wäßrige Polyurethan-Dispersionen werden aus ökologischen und wirtschaftlichen Gründen in zunehmendem Maße zur Herstellung von Überzügen mit dekorativer oder korrosionshemmender Wirkung verwendet. Besonders häufig werden dabei Polyurethane eingesetzt, die durch ihren Gehalt an Carbonsäuregruppen oder Sulfonsäuregruppen wasserdispergierbar sind. Zur Dispergierung in Wasser werden die Säuregruppen z.B. mit tertiären Aminen oder Alkali-Ionen neutralisiert, d.h. in die entsprechenden Anionen überführt.

Dispersionen dieser Art sind z.B. in der DE-A-26 45 779 beschrieben. Nachteilig an solchen Dispersionen ist jedoch ihr pH-Wert, der im allgemeinen über 8, meistens sogar noch höher liegt. Besonders störend ist dieser hohe pH-Wert, wenn in die Dispersion zur Erzielung eines dekorativen Metalleffekts blättchenförmige Aluminiumpigmente eingearbeitet werden sollen, da das Aluminium außerhalb des pH-Bereiches von 7.0 bis 7.5 gelöst wird. Ein Auflösen des Aluminiums kann nicht nur ein Koagulieren der Dispersion herbeiführen, sondern kann auch durch die damit verbundene Wasserstoffentwicklung zu gefährlichem Druckaufbau in Vorratsbehältern oder Verarbeitungsmaschinen führen.

Die Absenkung des pH-Wertes durch einfaches Zugeben freier Säuren gelingt nicht, da es an der Eintropfstelle zu lokalen Säureüberkonzentrationen kommt, die zur Koagulation der Dispersion führen.

In der DE-A-33 10 966 wird eine Methode zur Herstellung von Polyurethan-Dispersionen beschrieben, die auf PVC vergilbungsarme Beschichtungen ergeben. Nach dieser Schrift werden die Dispersionen z.B. mit Säureanhydriden oder -halogeniden versetzt, wobei - obwohl nicht erwähnt - eine Absenkung des pH-Wertes erfolgt. Dieses Verfahren hat jedoch gravierende Nachteile:
- die Handhabung von Säureanhydriden oder -halogeniden ist wegen deren Aggressivität mit erheblichem technischen Aufwand verbunden und arbeitshygienisch bedenklich und
- die Säureanhydride oder -halogenide enthalten häufig als Verunreinigung die entsprechenden Säuren oder hydrolysieren beim Kontakt mit Wasser so rasch, daß sie in ihrer die Dispersion schädigenden Wirkung Säuren gleichkommen.

Aus der WO-A-9117 196 ist die Verwendung von mit Essigsäuren veresterten Propandiolen und/oder Triolen als viskositätsregulierenden, nicht-reaktiven Komponenten bei der Herstellung von wäßrigen lagerstabilen Polyurethandispersionen nach an sich bekannten Verfahren bekannt.

Aufgabe der vorliegenden Erfindung war daher, ein Verfahren zur Verfügung zu stellen, das es erlaubt, den pH-Wert einer mit Carboxylat- oder Sulfonatgruppen stabilisierten Polyurethan-Dispersion auf Werte zwischen 7.0 bis 7.5 einzustellen, ohne aggressive Chemikalien wie Säureanhydride oder -halogenide zu verwenden.

Demgemäß wurde ein Verfahren zum Absenken des pH-Wertes von anionischen, durch Carboxylatgruppen oder Sulfonatgruppen stabilisierten Polyurethandispersionen gefunden, das dadurch gekennzeichnet ist, daß die Polyurethandispersionen mit einem nachfolgend näher definierten Ester versetzt wird. Weiterhin wurde eine Polyurethandispersion, welche einen nachfolgend näher definiertem Ester enthält, sowie die Verwendung der Polyurethandispersion als Überzugsmittel gefunden.

Als Aufbaukomponenten des Polyurethans sind Polyisocyanate (Monomere I), bevorzugt Diisocyanate, zu nennen.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocanato-3, 5,5-trimethyl-5-isocyanatomethylcyclohexan (IPDI), 4,4'-Diisocyanato-dicyclohexylpropan-2,2-, Trimethylhexandiisocyanat, 1,4-Diisocyanatobenzol, 2,4 Diisocyanatotoluol, 2,6-Diisocyanatotoluol, 4,4'-Diisocyanato-diphenylmethan, p-Xylylendiisocyanat sowie aus diesen Verbindungen bestehende Gemische.

Es ist auch möglich, die in der Polyurethanchemie bekannten höherfunktionellen Polyisocyanate oder modifizierte Polyisocyanate beispielsweise Carbodiimid-, Allophanat Isocyanurat-, Urethan-und/oder Biuretgruppen aufweisende Polyisocyanate anteilig mitzuverwenden, insbesondere auch nach dem in US-A-4 507 431 angegebenen Verfahren.

Bei den weiteren Aufbaukomponenten des Polyurethans handelt es sich zunächst um Polyole mit einem Molekulargewicht von 400 bis 6000 g/mol, vorzugsweise 600 bis 4000 g/mol (Monomere II).

In Betracht kommen insbesondere Polyetherpolyole oder Polyesterpolyole.

Bei den Polyesterdiolen handelt es sich insbesondere um die an sich bekannten Umsetzungsprodukte von zweiwertigen Alkoholen mit zweiwertigen Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, tetrahydrophthalsäureanhydrid, Glutarsäureanhydrid, Maleinsäure, Maleinsäureanhydrid, Fumarsäure, dimere Fettsäuren. Als mehrwertige Alkohole kommen z.B. Ethylenglykol, Propylenglykol-(1,2) und -(1,3), Butandiol-(1,4), -(1,3), Butendiol-(1,4), Butindiol-(1,4), Pentandiol-(1,5), Hexandiol-(1,6), Octandiol-(1,8), Neopentylglykol, Cyclohexandimethanol (1,4-Bis-hydroxymethylcyclohexan), 2-Methyl-1,3-propandiol, Pentandiol-(1,5), ferner Diethylenglykol, Triethylenglykol, Tetraethylenglykol, Polyethylenglykol, Dipropylenglykol, Polypropylenglykol, Dibutylenglykol und Polybutylenglykole in Frage. In geringen Mengen, d.h. im allgemeinen unter 10 mol.-%, bezogen auf die eingesetzten Alkohole, können auch höher als difunktionelle Alkohole, z.B. Glycerin, Trimethylolpropan oder Hexantriol (1,2,6) mit verwendet werden.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen bzw. Lactongemischen, wie z.B. ε-Caprolacton, β-Propiolacton, ν-Butyrolacton und/oder Methyl-ε-caprolacton an geeignete difunktionelle Startermoleküle, z.B. die vorstehend als Aufbaukomponente für die Polyesterpolyole genannten niedermolekularen, zweiwertigen Alkohole handelt. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren eingesetzt werden.

Die - gegebenenfalls auch im Gemisch mit Polyesterdiolen - einsetzbaren Polyetherdiole, sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), 4,4'-Dihydroxydiphenylpropan, Anilin erhältlich.

Der Anteil des vorstehend beschriebenen Monomeren II beträgt im allgemeinen 0,1 bis 0,8 Grammäquivalent, vorzugsweise 0,2 bis 0,7 Grammäquivalent der Hydroxylgruppe des Monomeren II bezogen auf 1 Grammäquivalent Isocyanat des Polyisocyanats.

Bei weiteren Aufbaukomponenten des Polyurethans handelt es sich um Kettenverlängerer oder Vernetzer mit mindestens zwei gegenüber Isocyanat reaktiven Gruppen, ausgewählt aus Hydroxylgruppen, primären oder sekundären Aminogruppen.

Genannt seien Polyole, insbesondere Diole und Triole mit einem Molekulargewicht unter 400 g/mol bis 62 g/mol (Monomere III).

Insbesondere kommen die oben aufgeführten zur Herstellung der Polyesterpolyole geeigneten Diole und Triole, sowie höher als trifunktionelle Alkohole wie Pentaerythrit oder Sorbit in Betracht.

Der Anteil der Monomeren III beträgt im allgemeinen 0-0,8 insbesondere o bis 0,7 Grammäquivalent, bezogen auf 1 Grammäquivalent Isocyanat.

Bei den gegebenenfalls einzusetzenden Monomeren IV handelt es sich um mindestens difunktionelle Amin-Kettenverlängerer bzw. -vernetzer des Molgewichtsbereiches von 32 bis 500 g/mol, vorzugsweise von 60 bis 300 g/mol, welche mindestens zwei primäre, zwei sekundäre oder mindestens eine primäre und mindestens eine sekundäre Aminogruppe enthalten.

Beispiel hierfür sind Diamine, wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan. Die aminogruppenhaltigen Kettenverlängerer können auch in blockierter Form, z.B. in Form der entsprechenden Ketimine (siehe z.B. CA-1 129 128), Ketazine (vgl. z.B. die US-A-4 269 748) oder Aminsalze (s. US-A-4 292 226) eingesetzt sein. Auch Oxazolidine, wie sie beispielsweise in der US-A-4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so daß intermediär hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Bei den gegebenenfalls ebenfalls als Kettenverlängerer einzusetzenden Monomeren V handelt es sich um Aminoalkohole mit einer Hydroxyl- und einer primären oder sekundären Aminogruppe wie Ethanolamin, Isopropanolamin, Methylethanolamin oder Aminoethoxyethanol.

Der Anteil der Monomeren IV oder V beträgt jeweils vorzugsweise 0 bis 0,4, besonders bevorzugt 0 bis 0,2 Grammäquivalent bezogen auf 1 Grammäquivalent Isocyanat des Polyisocyanats.

Als weitere Aufbaukomponente werden Verbindungen eingesetzt, die mindestens eine, vorzugsweise zwei gegenüber Isocyanatgruppen reaktionsfähige Gruppen, also Hydroxyl-, primäre oder sekundäre Aminogruppen, und außerdem im Gegensatz zu den voranstehend beschriebenen Monomeren Carbonsäuregruppen, Sulfonsäuregruppen oder deren Anionen aufweisen (Monomere VI). Durch Einführung der Monomeren VI werden die Polyurethane selbstdispergierbar, d.h. beim Dispergieren in Wasser werden in diesem Fall keine Dispergierhilfsmittel wie Schutzkolloide oder Emulgatoren benötigt.

Bevorzugte Monomere VI sind z.B. Diaminosulfonate, wie das Na-Salz der N-(2-Aminoethyl)-2-aminoethansulfonsäure, Dihydroxysulfonate, Dihydroxycarbonsäuren wie Dimethylolpropionsäure, Diaminocarbonsäuren bzw. -Carboxylate wie Lysin oder das Na-Salz der N-(2-Aminoethyl)-2-aminoethancarbonsäure.

Besonders bevorzugt enthalten die Monomeren VI eine Carbonsäuregruppe, bzw. deren Anion.

Ganz besonders bevorzugt sind Diamino- und Dihydroxycarbonsäuren, insbesondere das Addukt von Ethylendiamin an Natriumacrylat oder Dimethylolpropionsäure.

Diese Neutralisation kann vor, während, jedoch vorzugsweise nach der Isocyanat-Polyadditionsreaktion erfolgen.

Die Mengen der Monomeren VI ist geeigneterweise so zu wählen, daß die Polyurethane einen Gehalt von 0.05 bis 2 mÄqu/g Polyurethan, vorzugsweise von 0.07 bis 1.0 und besonders bevorzugt von 0.1 bis 0.7 mÄqu/g Polyurethan an Sulfonat- oder Carboxylatgruppen aufweisen.

Gegebenenfalls werden auch monofunktionelle Amin- oder Hydroxyl-verbindungen als Aufbaukomponenten mitverwendet (Monomere VII). Es handelt sich bevorzugt um einwertige Polyetheralkohole des Molgewichtsbereiches 500 bis 10 000 g/mol, vorzugsweise von 800 bis 5 000 g/mol. Einwertige Polyetheralkohole sind z.B. durch Alkoxylierung von einwertigen Startermolekülen,wie z.B. Methanol, Ethanol oder n-Butanol erhältlich, wobei als Alkoxylierungsmittel Ethylenoxid oder Gemische von Ethylenoxid mit anderen Alkylenoxiden, besonders Propylenoxid, eingesetzt werden. Im Falle der Verwendung von Alkylenoxidgemischen enthalten diese jedoch vorzugsweise mindestens 40, besonders bevorzugt mindestens 65 mol-% Ethylenoxid.

Durch die Monomeren VII können in den Polyurethanen somit gegebenenfalls in endständig angeordneten Polyetherketten vorliegende Polyethylenoxidsegmente eingebaut sein, die im Polyurethan neben den ionischen Gruppen den hydrophilen Charakter beeinflussen und eine Dispergierbarkeit in Wasser gewährleisten oder verbessern.

Die Verbindungen der genannten Art werden bevorzugt, so man von ihnen Gebrauch macht, in solchen Mengen eingesetzt, daß von ihnen von 0 bis 10, vorzugsweise von 0 bis 5 Gew.-% Polyethylenoxideinheiten in das Polyurethan eingebracht werden.

Weitere Beispiele von bei der Herstellung des Polyurethans als Monomere I bis VII einsetzbaren Verbindungen sind z.B. in High Polymers, Vol. XVI, "Polyurethanes, Chemistry and Technology", von Saunders-Frisch, Interscience Publishers, New York, London, Band I, 1962, Seiten 32 bis 42 und Seiten 44 bis 54 und Band II, Seiten 5 bis 6 und 198 bis 199, beschrieben.

Als Monomere VIII, welche im Gegensatz zu den voranstehenden Monomeren ethylenisch ungesättigte Gruppen enthalten, kommen z.B. Ester von Acryl- oder Methacrylsäure mit Polyolen, wobei mindestens eine OH-Gruppe des Polyols unverestert bleibt, in Betracht. Besonders geeignet sind Hydroxyalkyl (meth)acrylate HO(CH₂)ₙOOC(R¹)C=CH₂ (n = 2 bis 8; R¹ = H, CH₃) und ihre Stellungsisomeren, Mono(meth)acrylsäureester von Polyetherdiolen, wie z.B. bei den Monomeren II aufgeführt, Trimethylolpropanmono- und di(meth)acrylat, Pentaerythritdi- und tri(meth)acrylat) oder Reaktionsprodukte von Epoxidverbindungen mit (Meth)-acrylsäure, wie sie z.B. in der US-A-357 221 genannt sind. Besonders geeignet sind die Addukte von (Meth)acrylsäure an Bisglycidylether von Diolen wie z.B. Bisphenol A oder Butandiol.

Verwendbar sind auch Addukte von (Meth)acrylsäure an epoxidierte Diolefine wie z.B. 3,4-Epoxycyclohexylmethyl-3', 4'-epoxycyclohexancarboxylat.

Durch Einbau der Monomeren VIII kann, falls gewünscht, das Polyurethan thermisch oder photochemisch, gegebenenfalls in Gegenwart eines Initiators, nachträglich, d.h. nach Auftragen der Beschichtung, gehärtet werden.

Im allgemeinen liegt der Anteil der ethylenisch ungesättigten Gruppen unter 0,2 mol pro 100 g Polyurethan.

Insgesamt wird der Anteil der Aufbaukomponenten vorzugsweise so gewählt, daß die Summe der gegenüber Isocyanat reaktiven Hydroxylgruppen und primären oder sekundären Aminogruppen 0,9 bis 1,2, besonders bevorzugt 0,95 bis 1,1 bezogen auf 1 Isocyanatgruppe beträgt.

Die Herstellung der Polyurethan-Dispersionen kann nach den üblichen Methoden, wie sie z.B. in den oben angeführten Schriften beschrieben sind, erfolgen.

Bevorzugt wird in einem inerten, mit Wasser mischbaren Lösungsmittel, wie Aceton, Tetrahydrofuran, Methylethylketon oder N-Methylpyrrolidon aus den Monomeren I und II und gegebenenfalls III, V, VI, VII und VIII, falls VI keine Aminogruppen enthält, das Polyurethan oder, falls eine weitere Umsetzung mit aminofunktionellen Monomeren IV oder VI beabsichtigt ist, ein urethanprepolymer mit noch endständigen Isocyanatgruppen hergestellt.

Die Reaktionstemperatur liegt im allgemeinen zwischen 20 und 160, vorzugsweise zwischen 50 und 100°C. Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet sein.

Das erhaltene Polyurethanprepolymer kann, gegebenenfalls nach (weiterer) Verdünnung mit Lösungsmitteln der oben genannten Art, bevorzugt mit Lösungsmitteln mit Siedepunkten unter 100°C, bei einer Temperatur zwischen 20 und 80°C mit aminofunktionellen Verbindungen der Monomeren VI und gegebenenfalls IV weiter umgesetzt werden.

Die Überführung von Carboxylgruppen oder Sulfonsäuregruppen, welche über die Monomeren VI in das Polyurethan eingeführt wurden, in die entsprechenden Ionen erfolgt durch Neutralisation mit Basen vor oder während des Dispergierens des Polyurethans in Wasser.

Genannt seien organische oder anorganische Basen wie Alkalihydroxide, -carbonate oder -hydrogencarbonate, Ammoniak oder primäre, sekundäre und besonders bevorzugt tertiäre Amine wie Triethylamin oder Dimethylaminopropanol.

Nach der Dispergierung kann das organische Lösungsmittel, falls sein Siedepunkt unterhalb dem des Wasser liegt, abdestilliert werden. Gegebenenfalls mitverwendete Lösungsmittel mit einem höheren Siedepunkt können in der Dispersion verbleiben.

Der Gehalt des Polyurethans in den Dispersionen kann insbesondere zwischen 5 und 70 Gewichtsprozent, bevorzugt zwischen 20 bis 50 Gew.-%, bezogen auf die Dispersionen, liegen.

Durch den Gehalt an mit Basen neutralisierten Säuregruppen liegt der pH-Wert der Dispersionen im allgemeinen über 8.

Durch Zugabe der nachfolgend aufgeführten Verbindungen (im nachfolgenden kurz Ester genannt) kann der pH-Wert gesenkt werden, ohne daß die Dispersion geschädigt wird.

Es handelt sich um Ester von organischen Säuren der allgemeinen Formel

(R)ₓCₙH₍₂ₙ₊₂₋ₓ₎,

wobei n für eine ganze Zahl von 1 bis 8, x für eine ganze Zahl von 1 bis 4 und R für eine Säuregruppe -COOH, -SO₃H, -P(OH)₂ oder PO(OH)₂ steht.

Als Alkoholkomponente der Ester werden Monoalkohole mit bis zu 6 Kohlenstoffatomen verwendet.

Als Beispiele für die Ester seien z.B. die Methyl- oder Ethylester von Ameisen-, Essig-, Oxal-, Malon- und Adipinsäure genannt.

Die Ester werden der Polyurethandispersion im allgemeinen in einer Menge von 0,01 bis 10 Mol, bevorzugt 0,05 bis 2 Mol Estergruppen pro 1000 g Polyurethan zugesetzt. Der Ester wird nur in solchen Mengen zugesetzt, daß nach Zugabe des Esters der pH-Wert nicht unter 6 fällt. Insbesondere soll der pH-Wert nach Zugabe Werte von 7 bis 7,5 einnehmen.

Die zum Einstellen des gewünschten pH-Wertes exakt notwendige Menge Ester kann z.B. auch in Vorversuchen bestimmt werden.

Der Ester wird einfach in die Polyurethandispersion eingerührt, innerhalb von im allgemeinen 1 bis 24 Stunden stellt sich der pH-Endwert ein. Besonders schnell stellt sich der pH-Endwert bei Methylestern ein. Gegebenenfalls kann die Einstellung des pH-Wertes auch durch Temperaturerhöhung auf z.B. 30 bis 60°C beschleunigt werden.

Die flüchtigen Spaltprodukte des Esters können entweder in der Dispersion verbleiben oder destillativ entfernt werden. Eine besonders günstige Ausführungsform bei Dispersionen, die unter Benutzung eines leichtflüchtigen Lösungsmittels wie z.B. Aceton hergestellt wurden (s.o.), besteht darin, den Ester vor der Destillation zuzufügen und die Spaltprodukte des Esters zusammen mit dem leichtflüchtiger Lösungsmittel abzudestillieren.

Den erhaltenen Polyurethandispersionen können Hilfsmittel, z.B. Verdicker, Thixotropiermittel, Oxidations- und UV-Stabilisatoren, Trennmittel, Füllstoffe oder Pigmente zugesetzt werden.

Die erfindungsgemäßen Dispersionen können zur Herstellung von Beschichtungen, z.B. Lacken oder Schutzanstrichen, oder als Klebstoffe, Verwendung finden und weitere für die jeweilige Verwendung übliche Bestandteile enthalten.

### Beispiel

Zu 20 g einer 38 gew.-%igen Polyurethandispersion mit einem Gehalt an Carboxylatgruppen von 0,53 mol/kg Feststoff wurden die in der Tabelle angegebenen Mengen Ethylacetat gegeben. Die Dispersion wurde dann bei 22°C gelagert.

**Tabelle:**

| pH-Änderung nach Zugabe von Ethylacetat | | | | |
|---|---|---|---|---|
| | zugesetzte Menge Ethylacetat [g] | | | |
| Zeit (h) | 0 | 0,5 | 1,0 | 2,0 |
| 0 | 8,75 | 8,77 | 8,77 | 8,77 |
| 1 | 8,78 | 8,75 | 8,78 | 8,73 |
| 2 | 8,81 | 8,45 | 8,27 | 8,12 |
| 4 | 8,77 | 7,96 | 7,77 | 7,63 |
| 6 | 8,75 | 7,84 | 7,61 | 7,50 |
| 8 | 8,68 | 7,67 | 7,46 | 7,24 |
| 12 | 8,75 | 7,60 | 7,38 | 7,24 |
| 24 | 8,78 | 7,48 | 7,29 | 7,19 |
| 48 | 8,75 | 7,47 | 7,30 | 7,18 |

## Patentansprüche

1. Verfahren zum Absenken des pH-Wertes von anionischen, durch Carboxylatgruppen oder Sulfonatgruppen stabilisierten Polyurethandispersionen, dadurch gekennzeichnet, daß die Polyurethandispersionen mit Estern organischer Säuren der allgemeinen Formel
(R)ₓCₙH₍₂ₙ₊₂₋ₓ₎
wobei n für eine ganze Zahl von 1 bis 8, x für eine ganze Zahl von 1 bis 4 und R für eine Säuregruppe -COOH, -SO₃H, -P(OH)₂ oder PO(OH)₂ steht, und Monoalkoholen mit bis zu 6 Kohlenstoffatomen versetzt wird.

2. Polyurethandispersionen, erhältlich nach einem Verfahren gemäß Anspruch 1.

3. Verwendung von Polyurethandispersionen nach Anspruch 2 zur Herstellung von Überzügen und Verklebungen.

## Claims

1. A process for reducing the pH of anionic polyurethane dispersions which are stabilized by carboxylate or sulfonate groups, which comprises adding to the polyurethane dispersions esters of organic acids of the formula
(R)ₓCₙH₍₂ₙ₊₂₋ₓ₎
where n is an integer from 1 to 8, x is an integer from 1 to 4 and R is -COOH, -SO₃H, -P(OH)₂ or -PO(OH)₂, and monoalcohols with up to 6 carbon atoms.

2. A polyurethane dispersion obtainable by a process as claimed in claim 1.

3. The use of a polyurethane dispersion as claimed in claim 2 to produce coatings and adhesive bondings.

## Revendications

1. Procédé pour abaisser le pH de dispersions de polyuréthanes anioniques stabilisées par des groupements carboxylate ou sulfonate, caractérisé en ce qu'on additionne les dispersions de polyuréthanes avec des esters d'acides organiques de formule générale
(R)ₓCₙH₍₂ₙ₊₂₋ₓ₎
dans laquelle n est mis pour un entier de 1 à 8, x pour un entier de 1 à 4 et R pour un groupement acide -COOH, -SO₃H, -P(OH)₂ ou PO(OH)₂, et de monoalcools ayant jusqu'à 6 atomes de carbone.

2. Dispersions de polyuréthanes, obtenues par un procédé selon la revendication 1.

3. Utilisation de dispersions de polyuréthanes selon la revendication 2 pour la préparation de produits d'enduction et de colles.
